# EUROPEAN PATENT APPLICATION

(11) **EP 4 468 069 A1**
(43) Date of publication of application: **27.11.2024**
(21) Application number: 24178073.3
(22) Date of filing: 24.05.2024
(51) Int. Cl.: G02C 13/00

(54) **EYEGLASSES CLEANING KIT**

(30) Priority: 25.05.2023 CN 202321281230 U
(71) Applicant: Clean Glasses Company GmbH, 5040 Schöftland (CH)
(72) Inventor: TAIANA, Peter, 5432 Neuenhof (CH)
(74) Representative: Verscht, Thomas Kurt Albert

(57) **Abstract**

This application relates to eyeglasses cleaning kits. The eyeglasses cleaning kit described in this application includes: a first housing, a second housing, a soap cage, and brush heads; the first housing and the second housing are detachably connected; The soap cage is integrated in the first housing; the brush heads are integrated in the second housing. The eyeglasses cleaning kit described in this application has the advantages of being portable and convenient for cleaning eyeglasses lenses.

## Description

### Technical field

The present application relates to the technical field of eyeglasses, and in particular to an eyeglasses cleaning kit.

### Background technique

Eyeglasses are a combination of lenses and frames, used to improve vision, protect eyes or for decorative purposes. Eyeglasses can correct a variety of vision problems, including myopia, farsightedness, astigmatism, presbyopia, strabismus, or amblyopia, etc. The eyeglasses in the prior art are composed of lenses and frames. Therefore, for people whose vision needs correction, wearing eyeglasses has become a necessity in life, and they need to be worn for a long time.

In daily life and study, if you wear eyeglasses for a long time, dust and dirt and other substances will stay on the lenses and frames. On the one hand, it will affect the performance and use of the lenses, and on the other hand, it will have an impact on the eyes. Therefore, it is very necessary for people who wear eyeglasses to keep their lenses clean.

In the prior art, the main methods for cleaning eyeglasses lenses include: 1) wiping the lenses with eyeglasses cloth. 2) Rinse the eyeglasses with warm water to remove surface dust and other substances that may scratch the lenses. 3) Spray cleaner on both sides of the lens, and then wipe the lens gently. 4) Ultrasonic cleaning. For the first cleaning method, if the lens material is not hard enough, there will be problems with damaging the lens surface, so the first method is usually not chosen; for the last three cleaning methods, there will be problems with the complicated and cumbersome process.

Therefore, the existing technology mainly has the problem of difficulty in cleaning spectacle lenses.

### Utility model content

Based on this, the purpose of this application is to provide an eyeglasses cleaning kit, which has the advantages of portability and convenient cleaning.
In one aspect of the application, an eyeglasses cleaning kit is provided, including a first housing, a second housing, a soap cage, and two brush heads;
The first housing and the second housing are detachably connected;
The soap cage is integrated in the first housing;

The two brush heads are integrated in the second housing.

The eyeglasses cleaning kit described in this application, by sliding the first housing into the second housing, allows the soap cage and the brushes to be securely stowed away; in use, the brush heads are in contact with soap held in place by the soap cage, the brush heads pick up soap particles by rubbing on the soap cage, and then the brush heads are used to scrub the lenses; After the brushing is completed, the lenses and frames are placed under water and rinsed to complete the cleaning of the eyeglasses. The eyeglasses cleaning kit of the present application has the characteristics of exquisite structure, convenient assembly, easy portability, and storage, and is convenient for cleaning eyeglasses, making the cleaning of eyeglasses easy and convenient.
Further, the cross section of the first housing is in a "U" shape, and the cross section of the second housing is in a "U" shape;
The soap cage is integrated at the opening of the first housing;

The brush heads are integrated at the opening of the second housing.
Further, the first housing includes a first cover plate, a second cover plate and an arc-shaped connection; the first cover plate and the second cover plate are arranged symmetrically and connected through the arc-shaped connection;
The second housing includes a first side plate, a second side plate and a side plate connecting frame; the first side plate and the second side plate are arranged symmetrically and are connected and fixed by the side plate connecting frame;

The soap holder is installed between the first cover plate and the second cover plate, and the brush heads are installed between the first side plate and the second side plate.
Further, the left and right sides of the opening formed by the first cover plate, the second cover plate and the arc-shaped connection have an opening shape that matches the shape of the first side plate and the shape of the second side plate;

The first side plate, the second side plate and the upper and lower sides of the opening formed by the side plate connection frame match the shape of the opening of the first cover, and the shape of the second cover plate.

Further, the soap holder is formed symmetrically, one half of the soap holder is integrated in the first cover plate, and one second half of the other soap holder is integrated in the second cover plate; both halves of the soap holder form a gap or are in close contact.

A plurality of soap cage bars is evenly distributed on both the left and right side of the soap cage.
Further, the two brush heads are arranged symmetrically between the first side plate and the second side plate;
One brush head is attached on the first side plate and located away from the end of the side plate connecting frame;
The other brush head is attached on the second side plate and located away from the end of the side plate connection frame;

A gap is formed between the two brush heads.
Further, the first housing includes a first pair of stoppers and a second pair of stoppers;
The first two stoppers are respectively integrated in the first cover plate and the second cover plate and placed on the same end of the soap holder;

The second two stoppers are respectively integrated on the first cover plate and the second cover plate and are placed on the opposite side of the soap holder.

Further, anti-slip protrusions are respectively formed on the surfaces of the first cover plate, the second cover plate, the first side plate and the second side plate.
Further, the side plate connecting frame includes connecting ribs and "U" shaped ribs;
Two connecting ribs are arranged in parallel, and one end of the two connecting ribs is fixed to the first side plate, and the other end of the two connecting ribs is fixed to the second side plate;
A ventilation opening is formed between the two connecting ribs;
The two connecting ribs are respectively fixed on the first side plate and the second side plate;

The heights of the ribs are respectively smaller than the heights of the first side plate and the second side plate.
The first housing further includes a "U"-shaped limiting bar; the limiting bar is fixed between the first cover plate and the second cover plate;
The limiting bar is nested and matched with the rib bar;

Further, a ventilation opening is integrated in the middle of the arc-shaped connection section, and the opening extends to the first cover plate and the second cover plate.

Protrusions are formed on the ends of the first side plate and the second side plate, and the surfaces of the protrusions are inclined relative to the surfaces of the first side plate or the second side plate.

Further, the soap holder is designed to hold soap blocks with a rectangular or circular cross-section.

Further, the brush heads include a plurality of ultra-fine bristles, and the plurality of ultra-fine bristles are closely arranged.

For better understanding and implementation, the present application will be described in detail below in conjunction with the accompanying drawings.

### Description of drawings

Figure 1 is a schematic three-dimensional structural diagram of an exemplary eyeglasses cleaning kit of the present application;
Figure 2 is a top view of an exemplary eyeglasses cleaning kit of the present application;
Figure 3 is a schematic three-dimensional structural diagram of the first housing and the second housing in a separated state according to an exemplary embodiment of the present application;
Figure 4 is a schematic three-dimensional structural diagram of an exemplary first housing of the present application;
Figure 5 is a schematic three-dimensional structural diagram of the exemplary first housing of the present application from another perspective;
Figure 6 is a schematic three-dimensional structural diagram of an exemplary second housing of the present application;
Figure 7 is a top view of an exemplary second housing of the present application;
Figure 8 is a left view of an exemplary second housing of the present application.

### Detailed ways

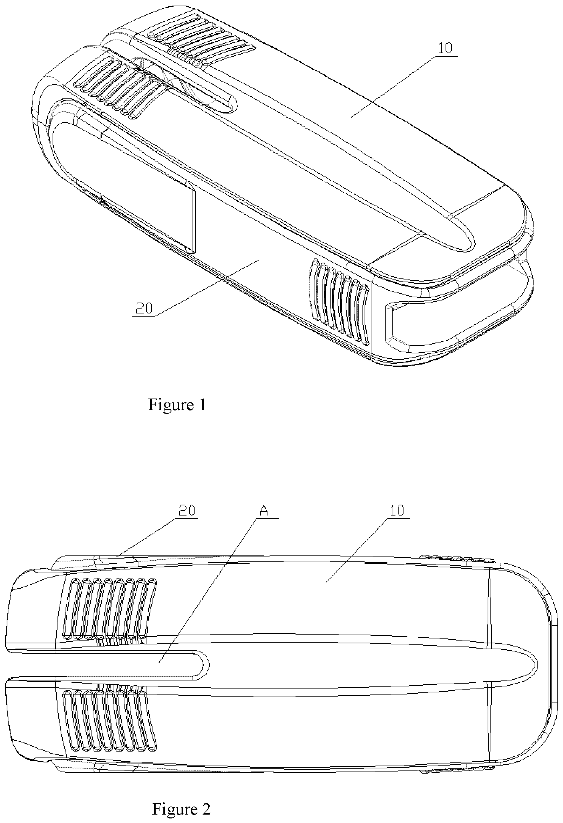

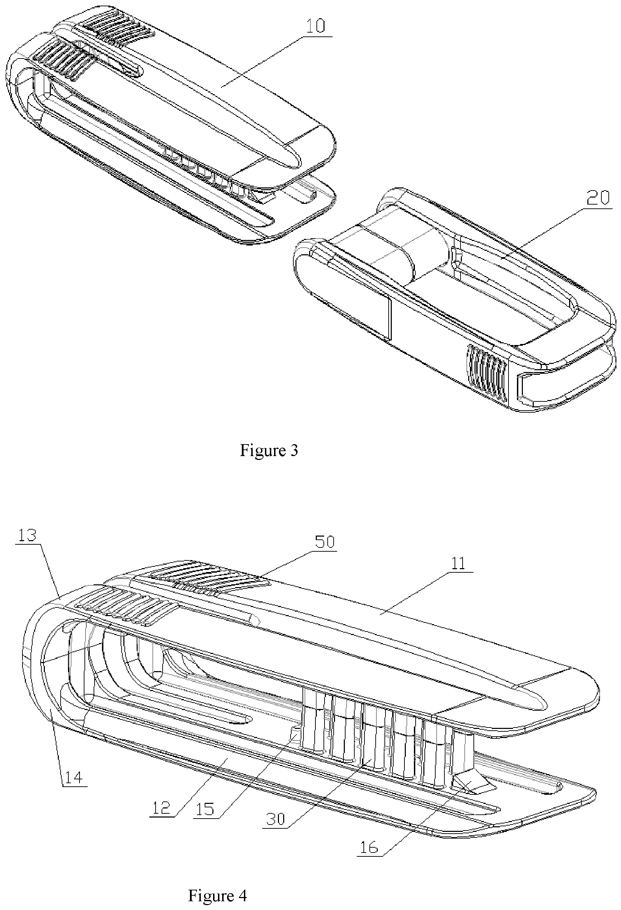

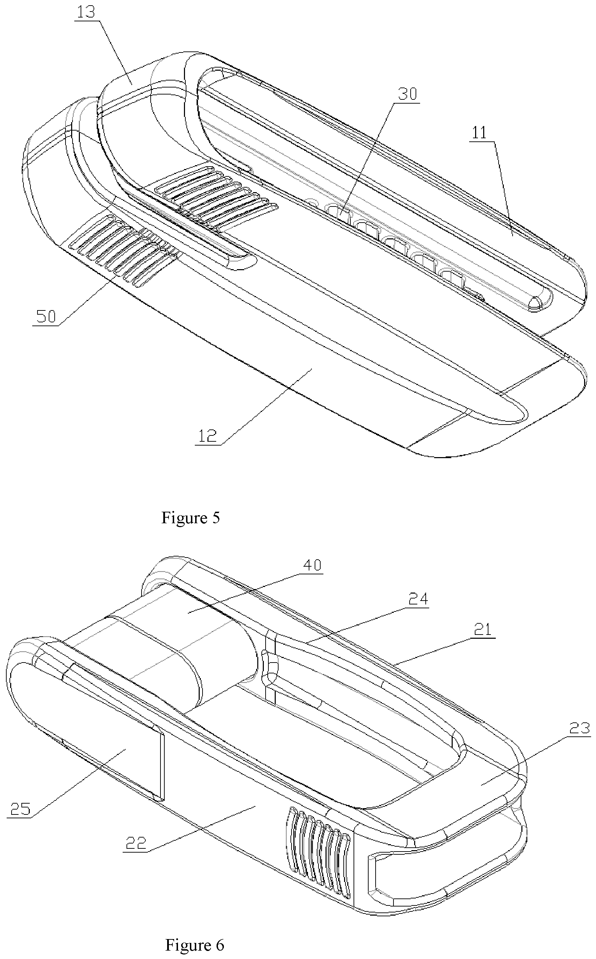

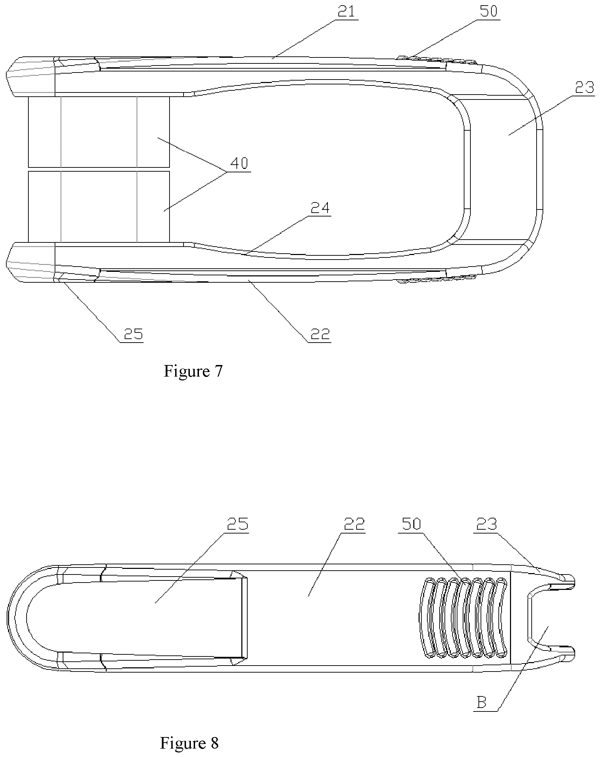

In the description of this application, it needs to be understood that the terms "centre", "longitudinal", "lateral", "upper", "lower", "front", "back", "left", "right", " the orientations or positional relationships indicated by "vertical", "horizontal", "top", "bottom", "inner", "outer", etc. are based on the orientations or positional relationships shown in the drawings, and are only for the convenience of describing the present application and the simplified description is not intended to indicate or imply that the device or element referred to must have a specific orientation, be constructed and operate in a specific orientation, and therefore should not be construed as a limitation on the present application. In the description of this application, unless otherwise stated, "plurality" means two or more.
Referring to Figures 1 to 8, an exemplary eyeglasses cleaning kit of the present application includes a first housing 10, a second housing 20, a soap holder 30, and brush heads 40;
The first housing 10 and the second housing 20 are detachably connected;
The soap holder 30 is integrated in the first housing 10;

The brush heads 40 are integrated in the second housing 20.

In this embodiment, the detachable connection of the first housing 10 and the second housing 20 includes a variety of connection methods. For example, the second housing 20 is placed on the first housing 10 and connected through an unlockable snap; another example is that the second housing 20 is placed on the first housing 10, and the two are not limited or fastened to each other. The connection relationship; for another example, the second housing 20 is fastened to the first housing 10, such as the bottle cap is opened or locked; and so on. In addition, in this embodiment, the shape of the first housing 10 and the shape of the second housing 20 are not clearly defined, but it can be determined that both the first housing 10 and the second housing 20 are shell shape, which has the feature and characteristics of a "shell".

In the eyeglasses cleaning kit described in this application, by interlocking the first housing 10 and the second housing 20, the soap holder 30, and the brush heads 40 can be safely stowed away; In the use, the brush heads 40 are in contact with the soap holder 30, the brush heads 40 pickup soap particles from the soap holder 30, and then the brush heads 40 are used to scrub the lenses; After the brushing is completed, the lens and frame are placed under water and rinsed, completing the cleaning of eyeglasses. The eyeglasses cleaning kit of the present application has the characteristics of exquisite structure, convenient assembly, easy portability, and storage, making the cleaning of eyeglasses easy and convenient.
In some preferred embodiments, the first housing 10 has a "U"-shaped cross section, and the second housing 20 has a "U"-shaped cross section;
The soap holder 30 is integrated at the opening of the first housing 10;

The brush heads 40 are integrated at the opening of the second housing 20.

In this preferred embodiment, the shapes of the first housing 10 and the second housing 20 are further defined respectively, thereby clarifying the shape structures of the first housing 10 and the second housing 20. The "U"-shaped structural feature allows the first housing 10 and the second housing 20 to be relatively nested and engaged, and also relatively separated. As for the definition of the positional relationship between the soap holder 30 and the first housing 10, the "opening" described in this embodiment is not limited to the end of the opening; rather, it refers to from the middle of the first housing 10 to the end of the opening of the first housing 10. At the same time, regarding the definition of the relative position of the brush heads 40 and the second housing 20, the "opening" described here is not limited to the end of the opening of the second housing 20; rather, it includes the opening from the middle of second housing 20 to the end of the opening of the second housing 20.

In a further preferred embodiment, the soap holder 30 is installed at the open end of the first housing 10, and the brush heads 40 are installed at the open end of the second housing 20, so that only the first housing 10 needs to be removed. The open end of the first housing 10 intersects with the open end of the second housing 20, so that the brush heads 40 and the soap holder 30 are in contact with each other, so that the relative reciprocating movement of the soap holder 30 and the brush heads 40 is easier to operate; their assembly positions is shown in the attached figure.
In some preferred embodiments, the first housing 10 includes a first cover plate 11, a second cover plate 12 and an arc-shaped connection section 13;

The first cover plate 11 and the second cover plate 12 are arranged symmetrically and connected through an arc-shaped connection section 13.

The second housing 20 includes a first side plate 21, a second side plate 22 and side plate connecting ribs; the first side plate 21 and the second side plate 22 are arranged symmetrically and connected through the connecting ribs 23.

The soap holder 30 is integrated in the first cover plate 11 and the second cover plate 12, and the brush heads 40 are integrated in the first side plate 21 and the second side plate 22.

In this embodiment, the first housing 10 includes three parts, namely a first cover plate 11 and a second cover plate 12 placed opposite each other, and an arc-shaped connection section 13, connecting the first cover plate 11 and the second cover plate 12. Then, in some processing methods, the first housing 10 can be split into three parts for manufacturing and processing, and then the three parts are joined and secured together; in other processing methods, the first housing 10 is formed in one piece; The one-piece molding method can be mold casting, 3D laser printing, blow molding, etc.

In this embodiment, the second housing 20 includes three parts, namely a first side plate 21 and a second side plate 22 placed opposite each other, and a side plate connecting ribs 23 connecting the first side plate 21 and the second side plate 22. Then, in some processing methods, the second housing 20 can be split into three parts for manufacturing and processing, and then the three parts can be joined and secured together; in other processing methods, the second housing 20 can be formed in one piece. The one-piece molding method can be mold casting, 3D laser printing, blow molding, etc.

In some further embodiments, the first cover plate 11 and the second cover plate 12 have the same shape and structure, but are in opposite directions, so that the first cover plate 11 and the second cover plate 12 form a symmetrical structure; the shape and structure of the first side plate 21 and the second side plate 22 are the same, but the direction is opposite, so that the first side plate 21 and the second side plate 22 form a symmetrical structure.
In some preferred embodiments, the left and right sides of the opening formed by the first cover plate 11, the second cover plate 12 and the arc-shaped connection section 13 have an opening shape matching the shape of the first side plate 21 and the shape of the second side plate 22;

Similarly, the first side plate 21, the second side plate 22 and the upper and lower sides of the opening formed by the side plate connection frame have an opening shape matching the shape of the first cover plate 11 and the shape of the second cover plate 12.

In this embodiment, the left and right sides of the opening respectively refer to the state in which the first housing 10 is placed with the first cover 11 at the top, the second cover 12 at the bottom, and the arc-shaped connection 13 at the rear; In this state, the opening of the first housing 10 faces the observer, so the opening of the first housing 10 includes three directions, namely the left side, the front side, and the right side. The opening shape of the first housing 10 matches the contour of the second housing 20, and the opening shape of the second housing 20 matches the contour of the first housing 10, so that when the two housings are fastened together, the fastening is tight and stable.
In some preferred embodiments, the soap holder 30 is formed symmetrically, the first half of the soap holder 30 is integrated in the first cover plate 11 and the second half of the soap holder 30 is integrated in the second cover plate 12. The two halves of the soap holder form a gap or are in close contact;

A plurality of cage bars 30 is evenly distributed between the first cover plate 11 and the second cover plate 12.
In some preferred embodiments, the two brush heads 40 are arranged oppositely between the first side plate 21 and the second side plate 22; thus, the two brush heads 40 are arranged symmetrically;
One brush head 40 is fixed on the first side plate 21 and is placed away from the end of the side plate connection frame;
The other brush head 40 is fixed on the second side plate 22 and placed away from the end of the side plate connection frame;

A gap is formed between the two brush heads 40.
In some preferred embodiments, the first housing 10 further includes a first pair of stoppers 15 and a second pair of stoppers 16;
The two first stoppers 15 are fixed on the first cover plate 11 and the second cover plate 12 respectively; and placed on one side of the soap cage 30;

The two second stoppers 16 are fixed on the first cover plate 11 and the second cover plate 12 respectively and are placed on the other side of the soap cage 30.

In some preferred embodiments, anti-slip protrusions 50 are respectively formed on the surfaces of the first cover plate 11, the second cover plate 12, the first side plate 21 and the second side plate 22.

The anti-slip protrusions 50 can have various shapes and structures, such as convex nails, convex strips, convex blocks, etc., and their arrangements are as follows: multiple convex nails evenly distributed, multiple convex strips arranged in parallel, multiple convex-shaped blocks, etc. The blocks are evenly distributed.

The anti-slip protrusions 50 mainly function to increase friction and prevent slipping, so as to facilitate the relative opening and separation of the first housing 10 and the second housing 20.
In some preferred embodiments, the side plate connecting frame includes connecting ribs 23 and "U"-shaped ribs 24;
Two connecting ribs 23 are arranged in parallel, with one end of each connecting rib 23 fixed to the first side plate 21, and the other ends fixed to the second side plate 22;
A ventilation opening B is formed between the two connecting ribs 23;
The two rib strips 24 are respectively fixed on the first side plate 21 and the second side plate 22;

The height of the rib strips 24 is smaller than the height of the first side plate 21 and the second side plate 22 respectively; so that the rib strip 24 forms an inwardly inclined slope relative to the first side plate 21 and relative to the second side plate 22. The shape is such as to provide more possible contact surfaces when the first housing and the second housing are assembled, thereby better ensuring the assembly tightness of the first housing and the second housing.
The first housing 10 also includes a "U"-shaped limiting bar 14; the limiting bar 14 is fixed between the first cover plate 11 and the second cover plate 12; The limiting bar 14 is nested with the rib strips 24;

In this embodiment, the rib strips 24 and the limiting bars 14 are respectively used to strengthen the connection effect. Through the nested fitting connection of the rib strips 24 and the limiting bars 14, the connection tightness of the first housing 10 and the second housing 20 is improved. Therefore, in some preferred examples, through the first cover plate, the second cover plate is connected and fastened to the first side plate and the second side plate respectively; in other preferred examples, the first cover plate and the second cover plate are connected to the first side plate and the second side plate respectively, and the ribs are connected and tightened with the limiting bars. In some preferred examples, the ribs and the limiting bars are mainly connected and tightened to ensure the tightness of the connection between the first housing and the second housing, and the first cover plate and the second cover plate are respectively connected with the first side. The connection tightness of the plate and the second side plate is weak, so that in this example, the ribs and limiting bars are used to ensure that the first housing and the second housing are connected tightly.

In this embodiment, the ventilation opening B improves the permeability of the second housing 20 and reduces the overall weight of the second housing 20. In addition, when the first housing and the second housing are assembled together, the opening also provides ventilation for the soap holder 30.

In some preferred embodiments, a ventilation channel A is provided in the middle of the arc-shaped connecting plate 13, and the ventilation channel A extends to the first cover plate 11 and the second cover plate 12.

Protrusions 25 are formed on the ends of the first side plate 21 and the second side plate 22, and the surface of the protrusion 25 is relative to the surface of the first side plate 21 or the second side plate 22. The surface is tilted.

In this embodiment, opening the channel A improves the ventilation of the first housing, and allows the cavity between the first housing and the second housing to have better air flow when they are assembled. In addition, the ventilation channel can reduce the weight of the first shell; in addition, the ventilation channel A also makes possible to divide the arc-shaped connection 13 to be divided into two halves allowing the first shell to become more flexible.

In some preferred embodiments, the soap cage 30 has a rectangular or circular cross-section. In other preferred examples, the soap cage 30 may be a washing paste holder or a solid soap block holder. The components of the soap block can be the same as laundry soap, the same as washing powder, the same as detergent, etc.

Furthermore, the brush heads 40 are made of a plurality of ultra-fine bristles, and the entire brush head 40 is in a block shape, such as a square shape, a cylindrical shape, or a circular shape. A plurality of ultra-fine bristles is arranged in parallel. Since the bristles are very fine, they have better flexibility, so that the brush heads have a good scrubbing effect.

In some preferred embodiments, the first housing 10 and the second housing 20 are respectively plastic shells; in other preferred embodiments, the first housing 10 and the second housing 20 are respectively metal shells, such as copper shells, aluminium alloy shells, iron shells, copper alloy shell, etc.; in some further preferred embodiments, the first housing 10 and the second housing 20 are respectively wooden shells; or the first housing 10 and the second housing 20 are respectively bamboo shells respectively; the first housing 10 and the second housing 20 are wood-plastic composite material shells respectively.

### The working principle and effect of this application's eyeglasses cleaning kit:

In the prior art, one way of routine cleaning of eyeglasses is with a dry eyeglass cloth, which makes it impossible to remove grease deposits in inaccessible places. At the same time, there is a risk that dirt will damage the optical coating on the lens. On the other hand, using a container filled with cleaning fluid for wet cleaning takes up a lot of space, so it is not suitable for mobile use and has the characteristics of fixed usage scenarios. Alternatively, using a cleaning spray won't completely remove grease deposits from hard-to-reach places like frames, nose pads, or hinges due to their shape. Alternatively, using a wet cleaning cloth carries the risk of mechanical damage to the connection from bridge to lens in rimless eyeglasses, and dirt cannot be completely removed in these connection areas. Therefore, the existing technology has problems such as inconvenience in use, inconvenience in cleaning, and even excessive cleaning.

The eyeglasses cleaning kit of the present application makes it possible to clean the entire pair of eyeglasses, because the brush head 40 used is composed of micro bristles, and the micro bristles can clean those inaccessible places as described above.

Specifically, when the eyeglasses cleaning kit of the present application is used, after moistening the lenses and the brush heads 40 with water, push the end of the second housing together with the brush heads 40 into the first housing and pull it out again to apply soap from the soap cage onto the brushes and then during the cleaning to the lenses. When cleaning eyeglasses, due to the thin and soft bristles forming the brush heads 40, almost no force is exerted onto the eyeglasses; and the brush heads 40 integrated in the second housing face each other, making the cleaning effect better than that of the prior art. This makes the eyeglasses cleaning kit of this application not only suitable for ordinary eyeglasses, but also suitable for cleaning fragile and rimless eyeglasses. The brush heads 40 permit to reach almost all hard-to-reach places, especially between spectacle frames and lenses, nose pads, behind the screw fittings and hinges, where skin oil or makeup accumulates: thus, making the eyeglasses cleaning kit of the present application more effective than the prior art. After brushing with the eyeglasses cleaning kit of this application, rinse the eyeglasses, especially the lenses, with water to remove all remaining soap on the eyeglasses. Eyeglass cleaning with this application's eyeglass cleaning kit requires less than 1L of water. Subsequently, the glasses, usually just the frame, must then be dried, as water tends to drip off coated lenses without wiping them dry.

The soap cage integrated in the first housing holds a bar of soap, and a plurality of cage bars columns are formed in the first housing. The setting direction of the cage bars is perpendicular to the sliding direction of the brush heads to prevent the bar of soap from being pulled out of the soap cage when the brushes are rubbed across the soap cage. The quantity of soap on the brush heads can be increased by the number of times the brush heads rub against the soap cage. After the soap is used up, a new block of soap can be installed in the soap cage. The first stopper 15 and the second stopper 16 provided at the front and rear of the soap cage can also be used for positioning when a new block of soap is installed to ensure the positioning accuracy when the new block of soap is installed. After usage, the eyeglasses cleaning kit of the present application is stowed away by sliding the first housing into the second housing.

The ventilation channel A of the first housing and the channel B of the second housing provide ventilation and drying effects for the brush heads and block of soap during storage.

The anti-slip protrusions 50 provided on the outsides of the first housing and the second housing facilitate the relative opening of the first housing and the second housing.

The eyeglasses cleaning kit of the present application can gently and thoroughly clean eyeglasses with the help of flowing water.

### Brief description of the embodiment and principle:

The eyeglasses cleaning kit of the present application includes a U-shaped second housing with two brush heads made of micro bristles and a U-shaped first housing with an integrated soap cage. The soap cage filled with solid soap is part of the first housing of the eyeglasses cleaning kit and is also used to store the second housing. Due to the compact structure of the eyeglasses cleaning kit of the present application, the eyeglasses cleaning kit is also suitable for mobile use during travel.

The eyeglasses cleaning kit of the present application has the advantages of compact structure, portability, easy operation, convenient cleaning of eyeglasses, water saving and energy saving.

The above-described embodiments only express several implementation modes of the present application, and their descriptions are relatively specific and detailed, but they should not be construed as limiting the scope of the patent application. It should be noted that, for those of ordinary skill in the art, several modifications and improvements can be made without departing from the concept of the present application, and these all fall within the protection scope of the present application.

## Claims

1. An eyeglasses cleaning kit, **characterized by** comprising a first housing, a second housing, a soap cage, and brush heads;
The first housing and the second housing are detachably connected;
The soap cage is integrated in the first housing;
The brush heads are integrated in the second housing.

2. The eyeglasses cleaning kit according to claim 1, **characterized in that**: the cross section of the first housing is in a "U" shape, and the cross section of the second housing is in a "U" shape;
The soap cage is located at the opening of the first housing;
The brush heads are located at the opening of the second housing.

3. The eyeglasses cleaning kit according to claim 1 or 2, **characterized in that**: the first housing includes a first cover plate, a second cover plate and an arc-shaped connection; the first cover plate and the second cover plates are arranged oppositely and connected through an arc-shaped connecting section;
The second housing includes a first side plate, a second side plate and a side plate connecting frame; the first side plate and the second side plate are arranged oppositely and are connected and fixed by the side plate connecting frame;
The soap cage is installed between the first cover plate and the second cover plate, and one brush head is integrated in the first side plate and the other one in the second side plate.

4. The eyeglasses cleaning kit according to claim 3, **characterized in that**: the left and right sides of the opening formed by the first cover plate, the second cover plate and the arc-shaped connection section have an opening shape consistent with the opening shape; The shape of the first side plate matches, and the shape of its opening also matches the shape of the second side plate;
The first side plate, the second side plate and the upper and lower sides of the opening formed by the side plate connection frame, the shape of the opening matches the shape of the first cover, and the shape of the opening also matches the shape of the second cover; The shapes of the two cover plates match.

5. The eyeglasses cleaning kit according to claim 3, **characterized in that**: the soap cage is divided in two parts, one half of the soap cage is attached on the first cover plate and the other half of the soap cage is attached on the second cover plate; both halves of the soap cage are either in close contact or form a gap;
The soap cage is formed with a plurality of cage bars evenly distributed between the first cover plate and the second cover plate.

6. The eyeglasses cleaning kit according to claim 3, **characterized in that**: two brush heads are arranged oppositely between the first side plate and the second side plate;
One end of the brush head is fixed on the first side plate and placed away from the end of the side plate connecting frame;
One end of the other brush head is fixed on the second side plate and placed away from the end of the side plate connection frame;
A gap is formed between the two brush heads.

7. The eyeglasses cleaning kit according to claim 3, wherein the soap cage includes a pair of soap stoppers on both sides of the cage; A first and a second stopper is integrated on the first housing; A first and second stopper is integrated on the second housing.

8. The eyeglasses cleaning kit according to claim 3, **characterized in that**: the surfaces of the first cover plate, the second cover plate, the first side plate and the second side plate are respectively formed with anti-slip protuberances.

9. The eyeglasses cleaning kit according to claim 3, **characterized in that**: the side plate connecting frame includes connecting ribs and "U"-shaped ribs;
Two connecting ribs are arranged in parallel, and one end of each connecting rib is fixed to the first side plate, and the other ends of the two connecting ribs are fixed to the second side plate; A ventilation opening is formed between the two connecting ribs;
The two ribs are respectively fixed on the first side plate and the second side plate;
The heights of the ribs are respectively smaller than the heights of the first side plate and the second side plate;
The first housing also includes a "U"-shaped limiting bar; the limiting bar is fixed between the first cover plate and the second cover plate;
The limiting bar is nested and matched with the rib.

10. The eyeglasses cleaning kit according to claim 3, **characterized in that**: a breathing channel is provided in the middle of the arc-shaped connecting plate, and the breathing channel extends to the first cover plate and the second cover plate;
Protrusions are formed on the ends of the first side plate and the second side plate, and the surfaces of the protrusions are inclined relative to the surfaces of the first side plate or the second side plate.

11. The eyeglasses cleaning kit according to claim 3, **characterized in that**: the soap cage is a soap column with rectangular or circular cross-section;
The brush head includes a plurality of ultra-fine bristles, and the plurality of ultra-fine bristles is closely arranged.
